# EUROPÄISCHE PATENTSCHRIFT

(11) **EP 2 486 374 B1**
(45) Veröffentlichungstag und Bekanntmachung des Hinweises auf die Patenterteilung: **21.12.2016**
(21) Anmeldenummer: 10767926.8
(22) Anmeldetag: 01.10.2010
(51) Int. Cl.: G01F 1/075

(54) **MESSVORRICHTUNG ZUR ERFASSUNG VON DREHSIGNALEN**
MEASURING DEVICE FOR DETECTING ROTATION SIGNALS
DISPOSITIF DE MESURE POUR DÉTECTION DE SIGNAUX DE ROTATION

(30) Priorität: 08.10.2009 DE 102009048612
(43) Veröffentlichungstag der Anmeldung: 15.08.2012
(73) Patentinhaber: Elster Messtechnik GmbH, 68623 Lampertheim (DE)
(72) Erfinder: RÜDIGER, Ameis, 69221 Dossenheim (DE)
(74) Vertreter: Fritsch, Klaus
(86) Internationale Anmeldenummer: PCT/EP2010/006008
(87) Internationale Veröffentlichungsnummer: WO 2011/042136

(56) Entgegenhaltungen:
- DE-A1-102005 021 300
- DE-A1-102005 030 983
- DE-A1-102006 046 864

## Beschreibung

Die Erfindung betrifft einen Flügelradwasserzähler mit einer Messvorrichtung zur Erfassung von Drehsignalen eines rotierenden Signalgebers mittels eines induktiven Abgriffs der Drehsignale des rotierenden Signalgebers nach dem Oberbegriff des Patentanspruchs 1 und eine Verwendung der Vorrichtung nach Anspruch 13. Die erfindungsgemäße Vorrichtung ist insbesondere zum Einsatz in elektronischen Flügelradwasserzählern geeignet.

Aus der DE 10 2006 046 864 A1 ist bekannt, dass bei bekannten elektronischen Wasserzählern, insbesondere in Mehrstrahl-Flügelradzählern, die Verbrauchsmessung durch eine Messwerterfassung mittels einer elektronischen Flügelradabtastung erfolgt. Dazu ist im Messtraum des Wasserzählers ein drehbeweglich gelagerter Messkörper, vorgesehen, der von dem durch den Messraum strömenden Medium in eine Drehbewegung versetzt wird und die Drehbewegung des als Flügelrad ausgeführten Messkörpers elektronisch mittels einer bei der Drehung des Flügelrades erzeugten induktiven Abtastung eines Signals, nachfolgend als Drehsignal bezeichnet, erfasst wird und von einer nachgeschalteten Auswerteelektronik ausgewertet wird.

Dazu werden die Schwingungen unter einer bestimmten Dämpfungsschwelle, beispielsweise in einem ASIC gezählt und mit der Anzahl von Schwingungen ohne Dämpfung verglichen. Aus der daraus ermittelten Differenz ist ableitbar, ob sich das Flügelrad dreht oder still steht.

Aus der DE 10 2005 021 300 A1 ist ein Drehgeber und insbesondere ein Absolutdrehgeber mit mindestens einem drehbaren Objekt und mindestens einem Sensorelement, wobei das Sensorelement ein analoges Signal in Abhängigkeit von der Drehposition des drehbaren Objekts relativ zu dem Sensorelement ausgibt, bekannt.

Bei der aus der EP 1 325 286 A1 bekannten Einrichtung zur kontaktlosen Messung des Drehzustandes des Flügelrades eines Flügelradwasserzählers werden mittels dreier Schwingkreisspulen, die im Raum über einer Sensoroberfläche, beispielsweise einem rotierenden nichtmagnetischen metallischen Dämpfungsplättchen aus Kupfer, Aluminium, rostfreiem Stahl oder Titan, ein veränderliches magnetisches Feld erzeugen, und für eine nachgeschaltete Auswerteelektronik Messwerte, d.h. die Zahl der Umdrehungen des Flügelrades, erfasst und ausgewertet. Das Kupferplättchen ist dazu am Flügelrad des Wasserzählers angebracht und bildet bei einer Bewegung des Flügelrades einen rotierenden Signalgeber, der mit den als induktiven Aufnehmer wirkenden Spulen zusammenwirkt.

Für die vorab beschriebene kontaktlose Messung der Drehbewegung des Flügelrades sind die Spulen im Trockenraum des Wasserzählers auf der Oberfläche einer, vorzugsweise kreisförmigen, Platine in der Nähe des abzutastenden Flügels des Flügelrades angebracht, wobei die Spulen, beispielsweise über ihre Anschlussdrähte mit einer Messplatine verbunden sind. Auch können die Spulen direkt in der Messplatine verlötet sein. Üblicherweise ist auf der Messplatine eine Auswerteelektronik zur Messwerterfassung angeordnet. Diese kann sich jedoch auch auf einer Hauptplatine befinden, die dann mit der Messplatine elektrisch verbunden ist.

Der Messraum des Wasserzählers, auch als Nassraum bezeichnet, mit dem Flügelrad und dem daran angebrachtem Signalgeber aufnehmenden Messeinsatz, ist vom Trockenraum des Wasserzählers durch ein Bauteil aus nichtmagnetischem Material, vorzugsweise Kunststoff, getrennt, das den Nassraum zum Trockenraum flüssigkeitsdicht abdichtet. Um eine ausreichende Messgenauigkeit bei der Ermittlung der Drehsignale des Signalgebers zu erreichen, ist der konstruktive Abstand zur Trennung von Nass- und Trockenraum zwischen dem als Dämpfungsplättchen ausgeführtem rotierendem Signalgeber und den jeweiligen Spulenkörpern auf maximal 5 mm begrenzt, wodurch an die konstruktive Ausgestaltung der Messanordnung besonders hohe Anforderungen gestellt werden.

Bei der Verwendung von kostengünstigen Eisenpulverspulen als induktive Aufnehmer, die im Zusammenwirken mit dem auf dem bewegten Flügel des Flügelrades befindlichen flachen Kupferplättchen nur ein schwaches magnetisches Feld erzeugen, beträgt ist die Distanz zum Kupferplättchen etwa 4mm.

Ein weiterer Nachteil der bisher in Wasserzählern eingesetzten Messvorrichtungen zur Erfassung von Drehsignalen des Flügelrades eines Wasserzählers beruht darauf, dass Schwankungen des Flügels die sehr sensible Messvorrichtung negativ beeinflussen.

Eine Ausführung des Dämpfungsplättchens aus Aluminium würde zwar zu einer Verbesserung des Dämpfungssignals zur Bestimmung der Drehzahl des Flügelrades führen, jedoch ist Aluminium als Material für den Signalgeber im Nassraum des Wasserzählers ungeeignet.

Um einen nahezu rückwirkungsfreien Flügelradabgriff zu erreichen, müssen die Spulenkörper auch in einem gewissen Mindestabstand vom Kupferplättchen jeweils in gleichem Abstand vom Mittelpunkt der kreisförmigen Platine unterhalb des Kupferplättchens angeordnet sein. Durch eine Positionierung der Spulen genau horizontal zum am Flügelrad befindlichen Kupferplättchen wird eine Messoptimierung durch eine DifferenzSignal-Verstärkung erreicht.

Ein schräges bzw. schiefes Einlöten der Spulen auf der Platine führt zu einer Verschlechterung des für die Drehzahlmessung benötigten Dämpfungssignals und somit zu gravierenden Messfehlern bei der Verbrauchsmessung.

Der Erfindung liegt demgemäss die Aufgabe zugrunde, einen Flügelradwasserzähler mit einer Messvorrichtung zur Erfassung von Drehsignalen eines rotierenden Signalgebers mittels eines induktiven Abgriffs der Drehsignale des rotierenden Signalgebers anzugeben, welche zuverlässiger arbeitet und konstruktionsbedingte Fehlmessungen, beispielsweise durch ungenaue Positionierung der Bauteile der Vorrichtung, reduziert.

Diese Aufgabe wird erfindungsgemäß mit den in Anspruch 1 angegebenen Merkmalen gelöst. Vorteilhafte Ausgestaltungen, Verbesserungen der erfindungsgemäßen Messvorrichtung sowie eine Verwendung der Messvorrichtung sind in weiteren Ansprüchen und in der Beschreibung angegeben.

Erfindungsgemäß umfasst die Messvorrichtung des Flügelradwasserzählers zur Erfassung von Drehsignalen einen im Messraum der Messvorrichtung angeordneten Messeinsatz, in dem ein Messkörper, beispielsweise ein Flügelrad von einer Flügelradwelle, drehbar gehalten ist. Der Messkörper ist mit einem im Messraum angeordnetem Signalgeber so verbunden, dass dieser bei einer Drehbewegung des Messkörpers über wenigstens einen induktiven Aufnehmer rotiert.

Vorzugsweise ist der induktive Aufnehmer in einem separaten Einbauteil angeordnet, welches in den Messraum der erfindungsgemäßen Messvorrichtung hineinragt.

Der Signalgeber ist als ein metallisches, eine geschlossene Leiterschleife bildendes, vorzugsweise ringförmiges, Bauteil ausgeführt, welches zu dem wenigstens einem induktiven Aufnehmer während der Drehbewegung des Messkörpers unterschiedlich beabstandet ist.

Erfindungsgemäß ist das metallische eine geschlossene Leiterschleife bildende Bauteil schräg in einem Winkel α im Bereich von 0 Grad < α < 90 Grad, vorzugsweise ca. 10 bis 45 Grad, zur Ebene einer Platine, welche den induktiven Aufnehmer trägt, angeordnet, so dass der Signalgeber bei einer Rotation des Messkörpers am induktiven Aufnehmer in unterschiedlichem Abstand vorbeiführbar ist und die Drehung des Messkörpers elektronisch mittels einer bei der Drehung des Signalgebers erzeugten induktiven Abtastung des Drehsignals erfassbar und von einer nachgeschalteten Auswerteelektronik auswertbar ist.

In einer besonderen Ausführungsform weist das metallische eine geschlossene Leiterschleife bildende Bauteil eine partielle zum induktiven Aufnehmer weisende Ausformung auf.

Der als umlaufendes eine geschlossene Leiterschleife bildende metallisches Bauteil ausgeführte Signalgeber kann wenigstens zwei Bereiche mit unterschiedlichen elektromagnetischen Eigenschaften aufweisen und/oder unsymmetrisch aufgebaut und/oder verformt sein.

Weiterhin kann das umlaufende metallische eine geschlossene Leiterschleife bildende Bauteil auch ein unsymmetrisch ausgeführter Ring sein, der beispielsweise an dem als Messkörper ausgebildetem Flügelrad selbst oder an der Welle die das Flügelrad trägt fest montiert ist bzw. auf dem Flügelrad festgeklipst oder eingespritzt ist.

In einer besonders vorteilhaften Ausführungsform ist das umlaufende metallische Bauteil schräg, vorzugsweise in einem Winkel α von ca. 20 Grad zu einer bevorzugt kreisförmigen Platine, auf der der induktive Aufnehmer üblicherweise befestigt ist, angeordnet. Dabei umschließt das metallische Bauteil den induktiven Aufnehmer und dämpft durch seine schräge Lage zur Rotationsachse des Messkörpers bzw. zur Platine die Induktivität, wenn seine höchste Stelle gerade im oberen Bereich des induktiven Aufnehmers ist und dämpft die Induktivität nicht, wenn er sich im unteren Bereich des induktiven Aufnehmers befindet. Die Dämpfung wird dabei durch magnetischen Kurzschluss des elektromagnetischen Wechselfeldes erzeugt.

Durch die vorab genannten konstruktiven Maßnahmen bei der Ausgestaltung des um den induktiven Aufnehmer laufenden metallischen ringförmigen eine geschlossene Leiterschleife bildende Bauteils, die hier nur beispielhaft genannt sind, wird in vorteilhafter Weise erreicht, dass die erfindungsgemäße Messvorrichtung zur Erfassung der Drehsignale des rotierenden Signalgebers zuverlässiger und mit einer verbesserten Messgenauigkeit arbeitet sowie konstruktionsbedingte Fehlmessungen, beispielsweise durch ungenaue Positionierung des induktiven Aufnehmers zum Signalgeber, verringert werden.

Die erfindungsgemäße Vorrichtung ist weiterhin mit einer Auswerteelektronik verbindbar, welche die mittels des induktiven Abgriffs der Drehsignale des rotierenden Signalgebers über den induktiven Aufnehmer bereitgestellten elektrischen Signale, also die Zahl der Umdrehungen des Signalgebers bei Verwendung eines induktiven Aufnehmers und/oder die Drehrichtung des Signalgebers, bei Verwendung von zwei induktiven Aufnehmern erfasst und ausgewertet.

In einer bevorzugten Ausführungsform der erfindungsgemäßen Vorrichtung sind der Messkörper als ein an einer Flügelradwelle befestigtes Flügelrad und der wenigstens eine induktive Aufnehmer als Spule ausgeführt. Der induktive Aufnehmer ist mit der Oberfläche einer, bevorzugt kreisförmigen, Messplatine in der Nähe des Signalgebers verbunden und mittels des in den Messraum hineinragenden Einbauteils vom im Messraum befindlichen strömenden Medium getrennt. Die Anschlussdrähte der Spulen können einerseits mit der Messplatine oder einer Hauptplatine verbunden sein.

Auch können die Spulen direkt in der Messplatine verlötet sein. Die Auswerteelektronik zur Auswertung der Drehbewegung des Messkörpers und damit auch des Signalgebers kann direkt auf der Messplatine angeordnet sein oder sich auf der Hauptplatine befinden, die dann mit der Messplatine elektrisch verbunden ist.

Zur Bestimmung der Anzahl der Drehsignale des rotierenden Signalgebers weist die erfindungsgemäße Messvorrichtung einen also wenigstens induktiven Aufnehmer auf, welcher mit dem rotierenden Signalgeber so zusammenwirkt, dass mittels der Auswerteelektronik aus den bereitgestellten Messwerten die Zahl der Umdrehungen des Signalgebers erfassbar und auswertbar sind.

Eine Ausgestaltung der erfindungsgemäßen Vorrichtung durch eine Verwendung von zwei induktiven Aufnehmern ermöglicht zusätzlich zur Bestimmung der Anzahl der Umdrehungen des Signalgebers auch eine Bestimmung der Drehrichtung des Signalgebers und des damit verbundenen Messkörpers.

In einer weiteren Ausgestaltung ist auf der Messplatine ein dritter induktiver Aufnehmer vorgesehen, der bei einem Ausfall oder einer fehlerhafter Funktionsweise einer der anderen beiden induktiven Aufnehmer deren Funktion mit übernimmt.

Mittels eines zusätzlichen dritten induktiven Aufnehmers, welcher ebenfalls auf der Platine angeordnet ist, kann in vorteilhafter Weise eine Redundanz der Messanordnung dahingehend erreicht werden, dass der dritte Aufnehmer die Funktion eines ausgefallenen Aufnehmers übernimmt. Die nunmehr verwendeten drei induktiven Aufnehmer sind vorzugsweise in einem Winkel von 120° zueinander versetzt auf der Platine angeordnet.

Der Messraum des Wasserzählers mit dem, vorzugsweise als Flügelrad, ausgebildeten Messkörper und dem daran angebrachtem Signalgeber ist vom Trockenraum des Wasserzählers durch ein Einbauteil aus nichtmagnetischem Material, vorzugsweise Kunststoff, getrennt. Das Bauteil ist dichtet den von einem strömenden Medium durchflossenen Messraum zum Trockenraum ab und dient zur Aufnahme des induktiven Aufnehmers.

In einer vorteilhaften Ausführungsform ragt das Einbauteil, in welchem der induktive Aufnehmer angeordnet ist, in den Messraum hinein, so dass es seitlich abgetastet wird und eine Toleranzschwankung nach unten/oben besser abgefangen wird. Außerdem, da es seitlich misst, können Schwankungen in den zwei Lagern, in denen das Flügelrad mit der Flügelradwelle drehbar gehalten ist, besser abgefangen werden und es wird eine bessere Abtastung des Signalgebers um den induktiven Aufnehmer erreicht.

Das metallische eine geschlossene Leiterschleife bildende Bauteil umläuft die Kontur des Aufnahmeteiles, in dem der induktive Aufnehmer angeordnet ist und in den Messraum hineinragt, wodurch sich weitere nachfolgend genannte Vorteile ergeben:
Es wird eine höhere Unabhängigkeit vom Spulenmaterial des Spulenkörpers und vom auf dem rotierenden Signalgeber befindlichen Ringmaterial erreicht sowie sind auch weniger feldstarke kostengünstige Eisenpulverspulen einsetzbar.

Des Weiteren lassen sich mit der erfindungsgemäßen Messvorrichtung Messfehler kompensieren, die durch einen unpräzisen, beispielsweise schiefen, Einbau der Spulen zum Signalgeber oder auftretende axiale Verschiebungen bei der Bewegung des Flügelrades auftreten.

In einer Ausgestaltung des metallischen Bauteils, kann dieses auch über den Bereich, in dem die Spulenkörper angeordnet sind, hinausragen.

Die erfindungsgemäße Messvorrichtung ist vorzugsweise zur Messwerterfassung in Verbrauchszählern, insbesondere in elektronischen Flügelradwasserzählern vorgesehen.

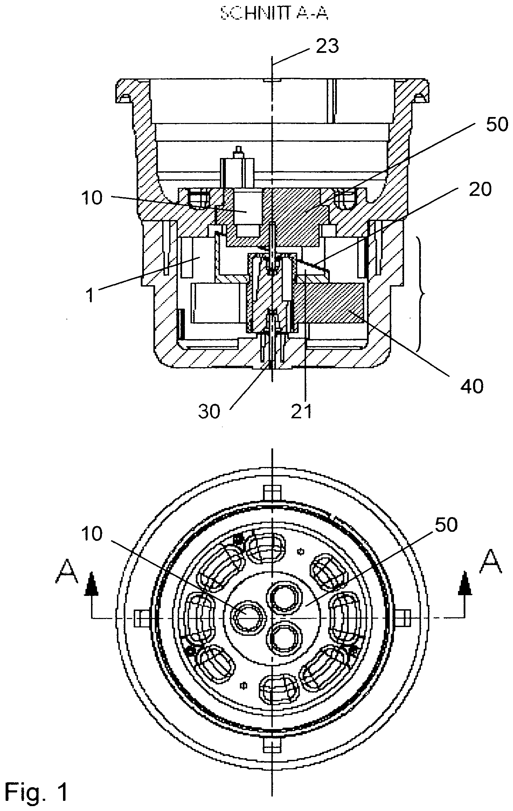

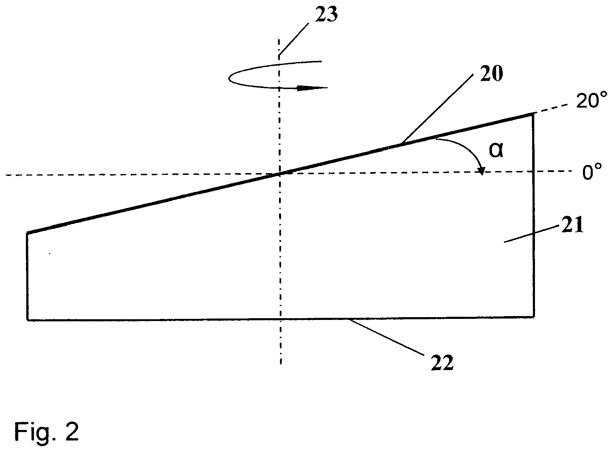

Anhand von den in den Figuren 1 und 2 dargestellten Ausführungsbeispielen sollen die erfindungsgemäße Messvorrichtung sowie vorteilhafte Ausgestaltungen, Verbesserungen und weitere Vorteile der Erfindung näher erläutert und beschrieben werden.

Es zeigen:
- **Fig. 1**: eine beispielhafte Darstellung der erfindungsgemäßen Messvorrichtung zur Erfassung von Drehsignalen an einem von einem strömenden Medium angetriebenen rotierenden Signalgeber eines Mehrstrahl- Flügelradzähler,
- **Fig. 2**: eine beispielhafte Darstellung des Signalgebers schräg zur Rotationsachse des Flügelrades auf einem Trägerelement, und
- **Fig. 3**: eine beispielhafte Ausführung des Signalgebers auf dem Trägerelement.

In **Fig.** 1 ist die erfindungsgemäße Messvorrichtung zur Erfassung von Drehsignalen an einem von einer Flüssigkeit angetriebenen rotierenden Flügelrades 40, das den Messkörper bildet, eines Mehrstrahl-Flügelradwasserzählers gezeigt. Der Flügelradwasserzähler umfasst einen im Messraum 1 des Zählers angeordneten Messeinsatz, in dem ein Flügelrad 40 von einer Flügelradwelle 30 drehbar gehalten ist. Die Flügelradwelle 30 wirkt mit einem im Messraum 1 angeordnetem Signal- oder Impulsgeber 20 so zusammen, dass dieser bei einer Drehbewegung des Flügelrades 40 über drei als Spulen ausgeführte induktive Aufnehmern 10 rotiert.

Der Signalgeber 20 ist als ein metallisches eine geschlossene Leiterschleife bildendes, vorzugsweise ringförmiges Bauteil, nachfolgend auch als metallischer in sich geschlossener bzw. geschlossener Ring 20 bezeichnet, ausgeführt, welcher schräg in einem Winkel α (10 Grad < α < 45 Grad), vorzugsweise ca. 20 Grad, zur Ebene einer Platine, welche den induktiven Aufnehmer trägt, auf einem Trägerelement 21 angeordnet ist, so dass der Signalgeber 20 an den Spulen 10 in unterschiedlichen Abstand vorbeiführbar ist. Jedoch erweisen sich auch Neigungswinkel des Ringes 20 zwischen 10 und 45 zu der den induktiven Aufnehmer tragenden Platine als vorteilhaft.

Eine beispielhafte schräge Anordnung des Signalgebers 20 zur Rotationsachse 23 des Flügelrades 40 ist in **Fig.** 2 schematisch dargestellt.

Damit ist die Drehung des Flügelrades 40 elektronisch mittels einer bei der Drehung des Flügelrades 40 erzeugten induktiven Abtastung des Drehsignals erfassbar und von einer nachgeschalteten Auswerteelektronik auswertbar.

Die drei Spulen 10 sind in einem separaten Einbauteil 50 angeordnet, dessen Kontur nach unten in den Messraum 1 des Zählers hineinragt bzw. in diesen eingewölbt ist, wobei der metallische Ring 20 diese Kontur umläuft.

Dadurch erfolgt eine Detektion des Drehsignals nicht mehr direkt über dem Spulenkörper sondern seitlich am Spulenkörper.

Beim Umlaufen des Flügelrades 40 und des damit verbundenen Ringes 20 ist abwechselnd eine der drei Spulen 10 gedämpft.

In einer bevorzugten Ausführungsform der erfindungsgemäßen Vorrichtung ist vorgesehen, dass der Bereich bzw. die Stelle (nachfolgend auch höchster Punkt genannt) des umlaufenden schräg gestellten Ringes 20, der während der Drehbewegung des Messkörpers 40 zum Spulenkörper den kleinsten Abstand aufweist, auf gleicher Höhe in die Spitze des Spulenkörpers eintaucht, die dem jeweils höchsten Punktes des Ring 20 am nächsten liegt, da ein Minimum des Eintauchens dieses Bereiches des umlaufenden Ringes 20 erforderlich ist, um eine seitliche Dämpfung des Drehsignals zu erreichen.

In Abhängigkeit von der Eintautiefe des höchsten Punktes des umlaufenden schräg gestellten Ringes, der während der Drehbewegung des Messkörpers 40 zum Spulenkörper den kleinsten Abstand aufweist, ist jeweils die Neigung des Ringes 20 entsprechend anzupassen.

Nur dann kann der magnetische Fluss wirksam an der Stelle des umlaufenden schräg gestellten Ringes 20, die während der Drehbewegung des Messkörpers 40 zum Spulenkörper den kleinsten Abstand über dem Spulenkörper erreicht, kurzgeschlossen sein. In einer bevorzugten Ausführungsform sollte die niedrigste Stelle des umlaufenden Ringes 20 mindestens 5mm von der zur Platine gesehenen unteren Spulenkörperspitze entfernt sein, damit an dieser Stelle kein magnetischer Kurzschluss zustande kommt.

Auch sollte der Ring 20 über der Spitze des Spulenkörpers geführt werden, da dann nicht mehr seitlich abgetastet wird und ein Verlust der kurzgeschlossenen Feldlinien entsteht. Optimal ist hier die vorab schon erwähnte Neigung des metallischen Ringes 20 von 20 Grad zur Ebene der Platine, welche die Spulen 10 trägt. Dies hat sich bei der Optimierung des Verhältnisses zwischen dem Strömungsverhalten im Medium des Wasserzählers, dessen Strömung durch den schräg gestellten Ring 20 und der Dämpfungsamplitude als vorteilhaft herausgestellt. Eine zu schwache Ringneigung bewirkt, dass der tiefste Punkt des Rings 20 ebenfalls die ihm nahe liegende Spule 10 mitdämpft. Daher wird die Dämpfungsamplitude geringer. Eine zu steile Stellung des Rings 20 bewirkt, dass die Strömung im Medium zu stark beeinflusst wird.

Das mit der erfindungsgemäßen Messanordnung erzeugte elektrische Signal wird von einer nicht dargestellten Auswerteelektronik ausgewertet und so die Zahl der Umdrehungen des Flügelrades 40 erfasst und ausgewertet.

Für eine Drehrichtungserkennung des rotierenden Flügelrades 40 sind im vorliegenden Beispiel zwei Spulen 10 erforderlich, wodurch sich im Ausführungsbeispiel zusätzlich zur Bestimmung der Drehgeschwindigkeit auch die Drehrichtung des Flügelrades 40 in bekannter Weise bestimmen lässt. Dies ist beispielsweise in der DE 41 37 696 beschrieben.

Die auf der Messplatine befindliche dritte Spule 10 ist als Redundanzspule vorgesehen und übernimmt bei Ausfall oder fehlerhafter Funktionsweise einer der anderen beiden Spulen 10 deren Funktion mit.

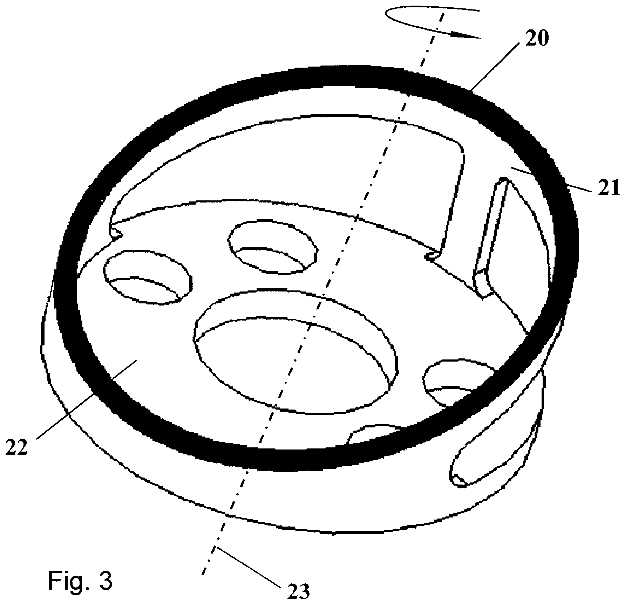

Eine konstruktive Ausführung des um die als Spule ausgeführten induktiven Aufnehmer 10 umlaufenden metallischen ringförmigen Bauteils 20 ist beispielhaft in **Fig.** 3 gezeigt, wobei das Bauteil 20 auf dem Trägerelement 21 an dessen Stirnseite bzw. Oberseite befestigt ist und in einem Winkel von ca. 20 Grad zur Grundfläche 22 des Trägerelements 21 geneigt ist.

In dieser vorteilhaften Ausführungsform des metallischen ringförmigen Bauteils 20 kann jedoch auch nur ein Teilbereich des Bauteiles 20 in Richtung der Spulenkörper umgebogen oder als kantige Ausformung gebildet sein, so dass dieser Teilbereich in die Spulenhöhe eintaucht. Das umlaufende ringförmigen Bauteil 20 muss dazu nicht mehr schräg gestellt werden, sondern es ist der Teilbereich in Richtung der Spulenkörper abgekantet, jeweils um genau bei einer der drei vorgesehenen Spulen 10 zu wirken, den es gerade überstreicht.

Das umlaufende metallische ringförmige Bauteil 20 kann beispielsweise mittels des Trägerelements 21 am Flügelrad 40 durch Befestigungselemente eingespritzt, eingeklipst oder geklebt sein.

## Patentansprüche

1. Flügelradwasserzähler mit einer Messvorrichtung zur Erfassung von Drehsignalen mit einem im Messraum (1) der Vorrichtung angeordnetem Messeinsatz, in dem ein Flügelrad (40) von einer Flügelradwelle (30), drehbar gehalten ist, mit einem im Messraum (1) angeordneten rotierenden Signalgeber (20), der mit dem Flügelrad (40) zusammenwirkt und bei einer Drehbewegung des Flügelrades (40) über wenigstens einen induktiven Aufnehmer (10) rotiert, **dadurch gekennzeichnet, dass** der rotierende Signalgeber (20) ein metallisches eine geschlossene Leiterschleife bildendes als geschlossener Ring ausgeführtes Bauteil (20) ist, welches zu dem wenigstens einen induktivem Aufnehmer (10) während der Drehbewegung des Flügelrades (40) unterschiedlich beabstandet ist, und dass das metallisches eine geschlossene Leiterschleife bildende Bauteil (20) schräg in einem Winkel α (10 Grad < α < 45 Grad) zur Ebene einer Platine, welche den wenigsten einen induktiven Aufnehmer trägt, angeordnet ist und der Winkel (α) zwischen 10 Grad und 45 Grad liegt.

2. Flügelradwasserzähler mit einer Messvorrichtung nach Anspruch 1, **dadurch gekennzeichnet, dass** das metallische eine geschlossene Leiterschleife bildende Bauteil (20) eine partielle zum induktiven Aufnehmer (10) weisende Ausformung aufweist.

3. Flügelradwasserzähler mit einer Messvorrichtung einem der vorstehenden Ansprüche, **dadurch gekennzeichnet, dass** der induktive Aufnehmer (10) in einem Einbauteil (50) angeordnet ist, welches in den Messraum (1) hineinragt.

4. Flügelradwasserzähler mit einer Messvorrichtung nach einem der vorstehenden Ansprüche, **dadurch gekennzeichnet, dass** das metallische eine geschlossene Leiterschleife bildende Bauteil (20) in einem Winkel von 20 Grad zu einer Ebene, auf welcher sich der wenigstens eine induktive Aufnehmer (10) befindet, angeordnet ist.

5. Flügelradwasserzähler mit einer Messvorrichtung nach einem der vorstehenden Ansprüche, **dadurch gekennzeichnet, dass** als induktive Aufnehmer (10) Ferritspulen oder Eisenpulverspulen vorgesehen sind.

6. Flügelradwasserzähler mit einer Messvorrichtung nach einem der vorstehenden Ansprüche, **dadurch gekennzeichnet, dass** das metallische eine geschlossene Leiterschleife bildende Bauteil (20) wenigstens zwei Bereiche mit unterschiedlichen elektromagnetischen Eigenschaften aufweist.

7. Flügelradwasserzähler mit einer Messvorrichtung nach einem der vorstehenden Ansprüche, **dadurch gekennzeichnet, dass** das nur ein Teilbereich des metallischen eine geschlossene Leiterschleife bildende Bauteils (20) in Richtung der als Spule ausgeführten induktiven Aufnehmer (10) umgebogen ist und/oder als kantige Ausformung gebildet ist, so dass dieser Teilbereich in die Spulenhöhe eintaucht.

8. Flügelradwasserzähler mit einer Messvorrichtung nach einem der vorstehenden Ansprüche, **dadurch gekennzeichnet, dass** das metallische eine geschlossene Leiterschleife bildende Bauteil (20) schräg zu einer Platine, vorzugsweise in einem Winkel von 20 Grad, auf welcher sich der induktive Aufnehmer (10) befindet, angeordnet ist.

9. Flügelradwasserzähler mit einer Messvorrichtung nach einem der vorstehenden Ansprüche mit einer Auswerteelektronik, welche die vom rotierenden Signalgeber (20) bereitgestellten Messwerte, d.h. die Zahl der Umdrehungen und/oder die Drehrichtung des Signalgebers (20) erfasst und ausgewertet.

10. Flügelradwasserzähler mit einer Messvorrichtung nach einem der vorstehenden Ansprüche, **dadurch gekennzeichnet, dass** zwei induktive Aufnehmer (10) vorgesehen sind, durch deren Anordnung zum rotierendem Signalgeber (20) eine Drehrichtungsbestimmung des rotierenden Signalgebers (20) ausführbar ist.

11. Flügelradwasserzähler mit einer Messvorrichtung nach Anspruch 10 mit einem zusätzlichen dritten induktiven Aufnehmer (10), der die Funktion eines ausgefallenen Aufnehmers (10) übernimmt.

12. Verwendung der Messvorrichtung nach einem der vorstehenden Ansprüche in elektronischen Wasserzählern, insbesondere Volumenzählern.

## Claims

1. Flywheel water meter having a measurement apparatus for detection of rotation signals with a measurement insert which is arranged in the measurement area (1) of the apparatus and in which a flywheel (40) is held by a flywheel shaft (30), such that it can rotate, having a rotating signal transmitter (20) which is arranged in the measurement area (1), interacts with the flywheel (40) and rotates over at least one inductive sensor (10) during a rotary movement of the flywheel (40), **characterized in that** the rotating signal transmitter (20) is a metallic component (20), which forms a closed conductor loop, is in the form of a closed ring and is at different distances from the at least one inductive sensor (10) during the rotary movement of the flywheel (40), and **in that** the metallic component (20) which forms a closed conductor loop is arranged obliquely at an angle α (10 degrees < α < 45 degrees) to the plane of a board to which the at least one inductive sensor is fitted and the angle (α) is between 10 degrees and 45 degrees.

2. Flywheel water meter having a measurement apparatus according to Claim 1, **characterized in that** the metallic component (20) which forms a closed conductor loop has a partial formed out area facing the inductive sensor (10).

3. Flywheel water meter having a measurement apparatus according to one of the preceding claims, **characterized in that** the inductive sensor (10) is arranged in a built-in part (50) which projects into the measurement area (1).

4. Flywheel water meter having a measurement apparatus according to one of the preceding claims, **characterized in that** the metallic component (20) which forms a closed conductor loop is arranged at an angle of 20 degrees to a plane on which the at least one inductive sensor (10) is located.

5. Flywheel water meter having a measurement apparatus according to one of the preceding claims, **characterized in that** ferrite coils or iron-powder coils are provided as the inductive sensor (10).

6. Flywheel water meter having a measurement apparatus according to one of the preceding claims, **characterized in that** the metallic component (20) which forms a closed conductor loop has at least two areas with different electromagnetic characteristics.

7. Flywheel water meter having a measurement apparatus according to one of the preceding claims, **characterized in that** the only one subarea of the metallic component (20) which forms a closed conductor loop is bent around in the direction of the inductive sensor (10) which is in the form of a coil and/or is in the form of an angled formed-out area, such that this subarea enters the coil height.

8. Flywheel water meter having a measurement apparatus according to one of the preceding claims, **characterized in that** the metallic component (20) which forms a closed conductor loop is arranged obliquely with respect to a board, preferably at an angle of approximately 20 degrees, on which the inductive sensor (10) is located.

9. Flywheel water meter having a measurement apparatus according to one of the preceding claims having evaluation electronics which detect and evaluate the measured values produced by the rotating signal transmitter (20), that is to say the number of revolutions and/or the rotation direction of the signal transmitter (20).

10. Flywheel water meter having a measurement apparatus according to one of the preceding claims, **characterized in that** two inductive sensors (10) are provided, whose arrangement with respect to the rotating signal transmitter (20) makes it possible to determine the rotation direction of the rotating signal transmitter (20).

11. Flywheel water meter having a measurement apparatus according to Claim 10 having an additional third inductive sensor (10) which takes over the function of a failed sensor (10).

12. Use of the measurement apparatus according to one of the preceding claims in electronic water meters, in particular volume meters.

## Revendications

1. Compteur d'eau à roue à palettes muni d'un dispositif de mesure destiné à acquérir des signaux de mesure avec un insert de mesure disposé dans un espace de mesure (1) du dispositif, dans lequel une roue à palettes (40) est maintenue en rotation par un arbre de roue à palettes (30), comprenant un codeur de signal (20) rotatif disposé dans l'espace de mesure (1), lequel coopère avec la roue à palettes (40) et qui, lors d'un mouvement de rotation de la roue à palettes (40), effectue une rotation sur au moins un capteur inductif (10), **caractérisé en ce que** le codeur de signal (20) rotatif est un composant (20) métallique forme une boucle conductrice fermée sous la forme d'un anneau fermé, lequel présente un espacement différent de l'au moins un capteur inductif (10) pendant le mouvement de rotation de la roue à palettes (40), et **en ce que** le composant (20) métallique formant une boucle conductrice fermée est disposé en biais selon un angle α (10 degrés < α < 45 degrés) par rapport au plan d'une platine qui support l'au moins un capteur inductif, et l'angle (α) est compris entre 10 degrés et 45 degrés.

2. Compteur d'eau à roue à palettes muni d'un dispositif de mesure selon la revendication 1, **caractérisé en ce que** le composant (20) métallique formant une boucle conductrice fermée présente une déformation partiellement orientée vers le capteur inductif (10).

3. Compteur d'eau à roue à palettes muni d'un dispositif de mesure selon l'une des revendications précédentes, **caractérisé en ce que** le capteur inductif (10) est disposé dans un composant de montage (50) qui fait saillie à l'intérieur de l'espace de mesure (1).

4. Compteur d'eau à roue à palettes muni d'un dispositif de mesure selon l'une des revendications précédentes, **caractérisé en ce que** le composant (20) métallique formant une boucle conductrice fermée est disposé à un angle de 20 degrés par rapport à un plan sur lequel se trouve l'au moins un capteur inductif (10).

5. Compteur d'eau à roue à palettes muni d'un dispositif de mesure selon l'une des revendications précédentes, **caractérisé en ce que** des bobines en ferrite ou des bobines en fer sont prévues en tant que capteur inductif (10).

6. Compteur d'eau à roue à palettes muni d'un dispositif de mesure selon l'une des revendications précédentes, **caractérisé en ce que** le composant (20) métallique formant une boucle conductrice fermée possède au moins deux zones ayant des propriétés électromagnétiques différentes.

7. Compteur d'eau à roue à palettes muni d'un dispositif de mesure selon l'une des revendications précédentes, **caractérisé en ce que** seule une zone partielle du composant (20) métallique formant une boucle conductrice fermée est repliée en direction du capteur inductif (10) réalisé sous la forme d'une bobine et/ou est réalisée sous la forme d'une déformation à arête vive, de sorte que cette zone partielle pénètre dans la hauteur de la bobine.

8. Compteur d'eau à roue à palettes muni d'un dispositif de mesure selon l'une des revendications précédentes, **caractérisé en ce que** le composant (20) métallique formant une boucle conductrice fermée est disposé en biais par rapport à une platine, de préférence selon un angle de 20 degrés, sur laquelle se trouve le capteur inductif (10).

9. Compteur d'eau à roue à palettes muni d'un dispositif de mesure selon l'une des revendications précédentes comprenant une électronique d'interprétation, laquelle collecte et interprète les valeurs mesurées délivrées par le codeur de signal (20) rotatif, c'est-à-dire le nombre de tours et/ou le sens de rotation du codeur de signal (20).

10. Compteur d'eau à roue à palettes muni d'un dispositif de mesure selon l'une des revendications précédentes, **caractérisé en ce qu'**il existe deux capteurs, inductifs (10) qui, de par leur disposition par rapport au codeur de signal (20) rotatif, permettent de réaliser une détermination du sens de rotation du codeur de signal (20) rotatif.

11. Compteur d'eau à roue à palettes muni d'un dispositif de mesure selon la revendication 10 comprenant un troisième capteur inductif (10) supplémentaire qui prend en charge la fonction d'un capteur (10) qui est tombé en panne.

12. Utilisation du dispositif de mesure selon l'une des revendications précédentes dans les compteurs d'eau électroniques, notamment les compteurs volumétriques.
